# EUROPÄISCHE PATENTSCHRIFT

(11) **EP 2 965 157 B1**
(45) Veröffentlichungstag und Bekanntmachung des Hinweises auf die Patenterteilung: **05.09.2018**
(21) Anmeldenummer: 13723770.7
(22) Anmeldetag: 16.05.2013
(51) Int. Cl.: G05B 19/042, G05B 19/418

(54) **VERFAHREN UND VORRICHTUNG ZUM BETREIBEN EINER PROZESS- UND/ODER FERTIGUNGSANLAGE**
METHOD AND APPARATUS FOR OPERATING A PROCESS AND/OR PRODUCTION INSTALLATION
PROCÉDÉ ET DISPOSITIF PERMETTANT DE FAIRE FONCTIONNER UNE INSTALLATION DE TRAITEMENT ET/OU DE FABRICATION

(43) Veröffentlichungstag der Anmeldung: 13.01.2016
(73) Patentinhaber: Siemens Aktiengesellschaft, 80333 München (DE)
(72) Erfinder: DALLMANN, Michael, 90530 Wendelstein (DE); DÜRR, Matthias, 90473 Nürnberg (DE)
(86) Internationale Anmeldenummer: PCT/EP2013/060187
(87) Internationale Veröffentlichungsnummer: WO 2014/183793

(56) Entgegenhaltungen:
- EP-A1- 1 624 351
- EP-A1- 1 770 463
- EP-A1- 2 112 774
- EP-A2- 1 965 316
- WO-A1-2013/030619

## Beschreibung

Die vorliegende Erfindung betrifft ein Verfahren zum Betreiben einer Prozess- und/oder Fertigungsanlage. Überdies betrifft die vorliegende Erfindung eine Vorrichtung zum Betreiben einer Prozess- und/oder Fertigungsanlage.

Bei der Planung und dem Betrieb von Prozess- und/oder Fertigungsanlagen werden üblicherweise sogenannte Toolchains verwendet. Diese bestehen aus mehreren Engineeringsystemen, die entlang einer vorgegebenen Betriebsreihenfolge miteinander verbunden sind. Dabei werden von den jeweiligen Engineeringsystemen Ausgabedateien erzeugt, die an die anderen Engineeringsysteme übergeben werden. Beispielsweise wird eine Signalliste aus einem CAE-Programm (CAE - Computer Aided Engineering) dazu verwendet, Steuergeräte zu programmieren. Dabei ist es schwierig, Abhängigkeiten der einzelnen Ausgabedateien voneinander zu überprüfen. Beispielsweise wird ein oberer Grenzwert für die Temperaturmessung mit einem CAE-Werkzeug definiert. Später wird dieser Wert unter Verwendung von Export- und Importfunktionen zu einem Engineeringsystem übertragen, das der Steuerung der Steuergeräte dient. Später kann dieser Grenzwert mittels eines Engineeringsystems oder von einer Oberwachungs- und Kontrolleinheit geändert werden. Damit können Inkonsistenzen zwischen den Daten, die mit dem CAE-Werkzeug bereitgestellt werden und den Daten, die von dem Engineeringsystem zur Steuerung der Steuergeräte bereitgestellt werden, entstehen. Hierbei werden aber die Personen, die die Anlage bedienen nicht über diese Widersprüche informiert. Zudem wird bei den meisten Engineeringsystemen ein Versionsmanagement nicht unterstützt.

Zur Lösung dieses Problems werden üblicherweise unterschiedliche Werkzeuge und/oder Prozesse bereitgestellt. Beispiele hierfür sind organisatorische Prozesse oder Engineeringprozesse, mit denen Änderungen überwacht werden können. Diese speziellen Funktionen werden aber üblicherweise nur in bestimmten Anwendungen oder Engineeringsystemen verwendet. Beispielsweise wird mit dem Werkzeug SIMATIC PCS 7 eine sogenannte "Upload"-Funktion bereitgestellt, mit der aktuelle Parameter und Werte von der Anlage in das zugehörige Engineeringsystem zurück übertragen werden. Üblicherweise sind die Betreiber der Anlage dafür verantwortlich, derartige Inkonsistenzen zu vermeiden. Zur Dokumentation und zum Projektmanagement werden hierzu üblicherweise Tabellenkalkulationsprogramme oder Textverarbeitungsprogramme verwendet.

Hierzu beschreibt die EP 1 624 351 A1 ein System, das ein industrielles System automatisiert, wobei das System eine Repräsentation des industriellen Systems, wobei die Repräsentation Entitäten in dem industriellen System durch Verwendung von Metadaten, die dem industriellen System zugeordnet sind, sowie von Softwareobjekten repräsentiert, wobei die Metadaten Daten sind, die Daten beschreiben, wobei die Metadaten Daten umfassen, die Zuordnungen zwischen den industriellen Systementitäten sowie Definitionen und Repräsentationen von industriellen Prozessen, die in dem industriellen System stattfinden, definieren. Ferner umfasst das System eine Konfigurationskomponente, die die Systemrepräsentation analysiert und mindestens einen Teil des industriellen Systems mindestens teilweise auf Basis von Metadaten automatisch konfiguriert.

Darüber hinaus beschreibt die EP 1 965 316 A2 ein System, mit dem Zeitreihendaten von einer Mehrzahl von Echtzeitdatenströmen von einem oder mehreren Sensoren empfangen werden können. Zudem kann eine elektronische Datei basierend auf der Mehrzahl von Echtzeitdatenströmen bereitgestellt werden. Die elektronische Datei enthält einen Datenanteil und einen Metadatenabschnitt. Der Metadatenabschnitt der elektronischen Datei enthält für jeden der Vielzahl von Datenströmen eine Datenstromkennung, einen Zeitbereich, und einen Quellentyp.

Es ist Aufgabe der vorliegenden Erfindung, eine Prozess- und/oder Fertigungsanlage zuverlässiger zu betreiben.

Diese Aufgabe wird durch ein Verfahren mit den Merkmalen des Patentanspruchs 1 und durch eine Vorrichtung mit den Merkmalen des Patentanspruchs 8 gelöst. Vorteilhafte Weiterbildungen der vorliegenden Erfindung sind Gegenstand der Unteransprüche.

Das erfindungsgemäße Verfahren zum Betreiben einer Prozess- und/oder Fertigungsanlage umfasst das Bereitstellen von zumindest zwei Engineeringsystemen zum jeweiligen Erzeugen einer Ausgabedatei, die eine Betriebsgröße zu zumindest einer Komponente der Prozess- und/oder Fertigungsanlage umfasst, das Bereitstellen einer ersten Ausgabedatei mit einem ersten der Engineeringsysteme, das Übertragen der ersten Ausgabedatei von dem ersten der Engineeringsysteme zu zumindest einem zweiten der Engineeringsysteme, das Bereitstellen einer zweiten Ausgabedatei mit dem zumindest zweiten der Engineeringsysteme anhand der ersten Ausgabedatei und das Betreiben der Prozess- und/oder Fertigungsanlage in Abhängigkeit von der zweiten Ausgabedatei, wobei erste Herkunftsdaten, die eine Herkunft der ersten Ausgabedatei von dem ersten der Engineeringsysteme beschreiben und zweite Herkunftsdaten, die eine Herkunft der zweiten Ausgabedatei von dem zweiten der Engineeringsysteme beschreiben, bereitgestellt werden, wobei zusätzlich zu den zweiten Herkunftsdaten zweite Verknüpfungsdaten bereitgestellt werden, die eine Verknüpfung zu den ersten Herkunftsdaten aufweisen und wobei bei einer Änderung der Betriebsgröße der zumindest einen Komponente die geänderte Betriebsgröße anhand der zweiten Verknüpfungsdaten von dem zweiten an das erste der Engineeringsysteme übertragen wird.

Das Verfahren kann auch zur Inbetriebnahme einer Prozess- und/oder Fertigungsanlage verwendet werden. Vorliegend werden zumindest zwei Engineeringsysteme verwendet, die in einer vorgegebenen Betriebsreihenfolge, einer sogenannten Toolchain, angeordnet sind. Mit dem ersten Engineeringsystem wird eine erste Ausgabedatei erzeugt, die Informationen zu einer Betriebsgröße zumindest einer Komponente der Anlage umfasst. Eine solche Betriebsgröße kann beispielsweise ein Grenzwert für eine Temperaturmessung einer Komponente der Anlage sein. Diese Betriebsgröße kann in einem Steuergerät der Anlage hinterlegt sein. Diese erste Ausgabedatei wird von dem ersten Engineeringsystem an das zweite Engineeringsystem übertragen. Die erste Ausgabedatei wird von dem ersten Engineeringsystem exportiert und von dem zweiten Engineeringsystem importiert. Das zweite Engineeringsystem erstellt anhand der ersten Ausgabedatei eine zweite Ausgabedatei. Diese zweite Ausgabedatei kann dazu verwendet werden, die Prozess- und/oder Fertigungsanlage zu betreiben.

Zusätzlich zu der ersten Ausgabedatei des ersten Engineeringsystems werden erste Herkunftsdaten bereitgestellt, die die Herkunft der ersten Ausgabedatei von dem ersten Engineeringsystem beschreibt. Die ersten Herkunftsdaten geben eine Information darüber, dass die erste Ausgabedatei mit dem ersten Engineeringsystem erstellt wurde. Zudem werden zweite Herkunftsdaten bereitgestellt, die eine Herkunft der zweiten Ausgabedatei von dem zweiten der Engineeringsysteme beschreiben. Anhand der ersten und zweiten Herkunftsdaten kann somit nachverfolgt werden, welche Ausgabedatei von welchem Engineeringsystem stammt. Damit kann auch überprüft werden, von welchem Engineeringsystem beispielsweise eine Betriebsgröße bereitgestellt oder geändert wurde.

Zu den zweiten Herkunftsdaten werden zweite Verknüpfungsdaten bereitgestellt, die eine Verknüpfung zu den ersten Herkunftsdaten aufweisen. Die zweiten Herkunftsdaten können beispielsweise zusammen mit den zweiten Verknüpfungsdaten in einer gemeinsamen Datei bereitgestellt werden. Durch die zweiten Verknüpfungsdaten kann eine direkte Verbindung zu den ersten Herkunftsdaten bereitgestellt werden, die angeben, dass die erste Ausgabedatei von dem ersten Engineeringsystem bereitgestellt wurde. Somit kann die Abhängigkeit zwischen den Ausgabedateien einfach untersucht werden.

Bei einer Änderung der Betriebsgröße der zumindest einen Komponente wird die geänderte Betriebsgröße anhand der zweiten Verknüpfungsdaten von dem zweiten an das erste der Engineeringsysteme übertragen. Eine Betriebsgröße einer Komponente kann beispielsweise durch eine Bedieneingabe oder durch ein Engineeringsystem selbst geändert werden. Um diese geänderte Betriebsgröße an alle Engineeringsysteme zu übertragen, kann beispielsweise von dem zumindest zweiten Engineeringsystem eine Ausgabedatei erzeugt werden, die entgegen der Bearbeitungsrichtung der Toolchain zu dem ersten der Engineeringsysteme übertragen wird. Die Ausgabedatei, die von dem zweiten der Engineeringsysteme erzeugt wird, kann die geänderte Betriebsgröße umfassen.

In einer Ausführungsform werden zu den ersten und den zweiten Herkunftsdaten zusätzlich ein Zeitstempel und/oder eine Versionsnummer bereitgestellt. Durch einen Zeitstempel kann einfach nachverfolgt werden, wann eine Ausgabedatei von einem Engineeringsystem erstellt wurde. Mittels einer Versionsnummer kann auf einfache Weise überprüft werden, wie oft eine Ausgabedatei bereits geändert wurde. Somit können etwaige Inkonsistenzen in den Ausgabedateien der Engineeringsysteme herausgefunden werden.

Bevorzugt wird eine Fehlermeldung erzeugt, falls die geänderte Betriebsgröße nicht von dem zweiten an das erste der Engineeringsysteme übertragen wird. Damit kann sichergestellt werden, dass in den Engineeringsystemen die aktuellen Betriebsgrößen als Grundlage zum Planen und/oder Steuern der Anlage vorhanden sind.

In einer weiteren Ausgestaltung werden die ersten Herkunftsdateien in der ersten Ausgabedatei und die zweiten Herkunftsdateien in der zweiten Ausgabedatei bereitgestellt. Damit können die jeweiligen Herkunftsdateien zusammen mit dem dazugehörigen Ausgabedateien an die Engineeringsysteme übertragen werden. So kann zuverlässig garantiert werden, dass die Herkunftsdateien an die Engineeringsysteme übertragen werden.

Alternativ dazu werden die ersten und die zweiten Herkunftsdateien jeweils in einer separaten Datei bereitgestellt. Die jeweiligen Herkunftsdaten können in einer übergeordneten Datei gesammelt werden. Somit kann ein Überblick bereitgestellt werden, welche Dateien von welchem Engineeringsystem bereitgestellt wurden.

In einer weiteren Ausführungsform werden die ersten Herkunftsdaten von dem ersten der Engineeringsysteme und die zweiten Herkunftsdaten von dem zweiten der Engineeringsysteme bereitgestellt. Bei dem Erzeugen der jeweiligen Ausgabedatei kann das Engineeringsystem zugleich die dazugehörige Herkunftsdatei erzeugen. Diese Variante eignet sich insbesondere, wenn die Herkunftsdaten zusammen mit der jeweiligen Ausgangsdatei bereitgestellt werden. In einer weiteren Ausgestaltung werden die ersten und die zweiten Herkunftsdaten von einer separaten Recheneinrichtung bereitgestellt. Auf dieser separaten bzw. übergeordneten Recheneinrichtung können auch die aktuellen Herkunftsdaten gespeichert sein. Damit kann eine übergeordnete Recheneinrichtung bereitgestellt werden, mit der die Ausgabedateien und die dazugehörige Herkunftsdaten verwaltet werden. Damit können Inkonsistenzen zwischen den Ausgabedateien und den darin enthaltenen Betriebsgrößen verhindert werden.

Die erfindungsgemäße Vorrichtung zum Betreiben einer Prozess- und/oder Fertigungsanlage umfasst eine Mehrzahl von Engineeringsystemen zum jeweiligen Erzeugen einer Ausgabedatei, die eine Betriebsgröße zu zumindest einer Komponente der Prozess- und/oder Fertigungsanlage umfasst, wobei ein erstes der Engineeringsysteme eine erste Ausgabedatei bereitstellt und von dem ersten der Engineeringsysteme zu zumindest einem zweiten der Engineeringsysteme überträgt, wobei zumindest ein zweites der Engineeringsysteme eine zweite Ausgabedatei anhand der ersten Ausgabedatei bereitstellt ist, wobei die Vorrichtung die Prozess- und/oder Fertigungsanlage in Abhängigkeit von der zweiten Ausgabedatei betreibt, wobei die Vorrichtung erste Herkunftsdaten, die eine Herkunft der ersten Ausgabedatei von dem ersten der Engineeringsysteme beschreibt, und zweite Herkunftsdaten, die eine Herkunft der zweiten Ausgabedatei von dem zweiten der Engineeringsysteme beschreibt, bereitstellt und zusätzlich zu den zweiten Herkunftsdaten zweite Verknüpfungsdaten bereitstellt, die eine Verknüpfung zu den ersten Herkunftsdaten aufweisen, wobei das zweite der Engineeringsysteme bei einer Änderung der Betriebsgröße der zumindest einen Komponente die geänderte Betriebsgröße anhand der zweiten Verknüpfungsdaten an das erste der Engineeringsysteme überträgt.

Die zuvor im Zusammenhang mit dem erfindungsgemäßen Verfahren beschriebene Vorteile und Weiterbildungen können auf die erfindungsgemäße Vorrichtung übertragen werden.

Die vorliegende Erfindung wird nun anhand der beigefügten Zeichnungen näher erläutert. Dabei zeigen:
- FIG 1: eine schematische Darstellung einer Vorrichtung zum Betreiben einer Prozess- und/oder Fertigungsanlage;
- FIG 2: eine schematische Darstellung der Vorrichtung gemäß FIG 1 gemäß einer weiteren Ausführungsform;
- FIG 3: einen zeitlichen Ablaufplan, in dem das Bereitstellen von Ausgabedateien von Engineeringsystemen der Prozess- und/oder Fertigungsanlage verdeutlicht ist;
- FIG 4: eine zeitliche Darstellung gemäß FIG 3 in einer weiteren Ausführungsform;
- FIG 5: eine schematische Darstellung der Vorrichtung in einer weiteren Ausführungsform;
- FIG 6: eine schematische Darstellung der Vorrichtung in einer weiteren Ausführungsform;
- FIG 7: eine schematische Darstellung der Vorrichtung in einer weiteren Ausführungsform; und
- FIG 8: eine schematische Darstellung zur Verdeutlichung der Erstellung von Ausgabedateien und Herkunftsdaten der Engineeringsysteme.

Die nachfolgend näher geschilderten Ausführungsbeispiele stellen bevorzugte Ausführungsformen der vorliegenden Erfindung dar.

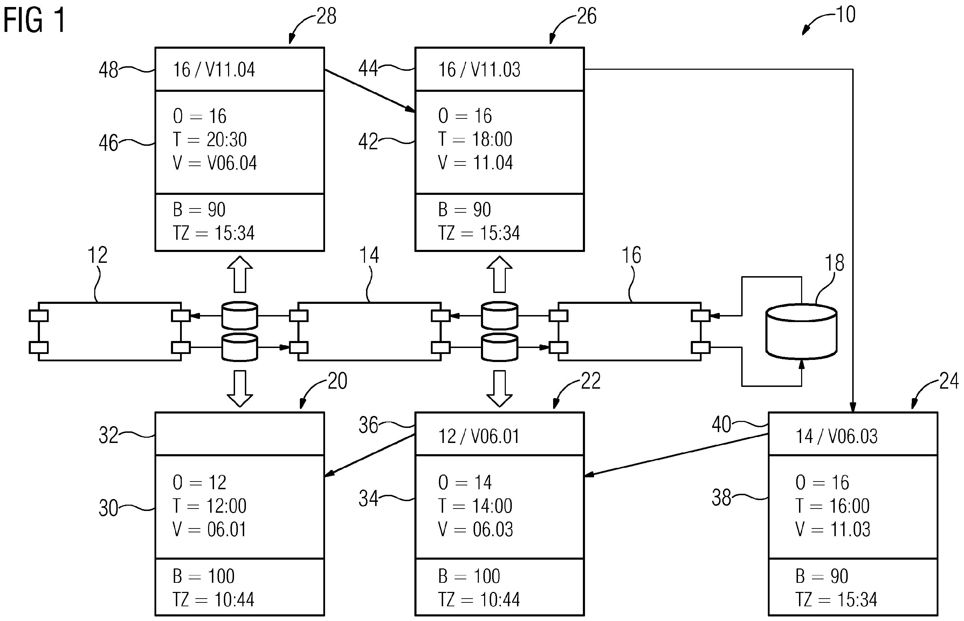

FIG 1 zeigt eine schematische Darstellung einer Vorrichtung 10 zum Steuern einer Prozess- und/oder Fertigungsanlage. Die Vorrichtung 10 umfasst zumindest zwei Engineeringsysteme. Im vorliegenden Ausführungsbeispiel umfasst die Vorrichtung 10 drei Engineeringsysteme 12, 14 und 16. Die Engineeringsysteme 12, 14, 16 sind in ihrer Prozessreihenfolge in einer Toolchain nacheinander angeordnet. Jedes der Engineeringsysteme 12, 14, 16 erzeugt eine Ausgabedatei, die Informationen zu zumindest einer Betriebsgröße der Anlage umfasst. Im vorliegenden Ausführungsbeispiel handelt es sich bei dem ersten der Engineeringsysteme 12 um ein Werkzeug, mit dem ein Rohrleitungs- und Instrumentierungsplan der Anlage bereitgestellt werden kann. Das erste Engineeringsystem 12 erzeugt eine erste Datei 20, die an das zweite Engineeringsystem 14 übertragen wird. Das zweite Engineeringsystem 14 ist im vorliegenden Fall ein Engineeringsystem, mit dem ein Stromlaufplan der Anlage bereitgestellt wird. Anhand der ersten Ausgabedatei 20, die von dem ersten Engineeringsystem 12 bereitgestellt wird, wird von dem zweiten Engineeringsystem 14 eine zweite Ausgabedatei 22 erzeugt. Die zweite Ausgabedatei 22 wird an ein drittes Engineeringsystem 16 übertragen. Das dritte Engineeringsystem 16 ist im vorliegenden Ausführungsbeispiel ein Werkzeug, mit dem ein Programmcode für Steuereinrichtungen der Anlage bereitgestellt werden kann.

Die erste Ausgabedatei 20 umfasst erste Herkunftsdaten 30. In den Herkunftsdaten 30 wird eine Ursprungsangabe O angegeben, die angibt, von welchem Engineeringsystem 12, 14, 16 die Ausgabedatei 20 erzeugt wurde. Des Weiteren umfasst die Herkunftsdatei 30 einen Zeitstempel T und eine Versionsangabe V. Des Weiteren ist in der Herkunftsdatei eine Betriebsgröße B hinterlegt, die im vorliegenden Beispiel einen Maximalwert bei einer Temperaturmessung angibt. Zudem kennzeichnet der zweite Zeitstempel T2 den Änderungszeitpunkt der Betriebsgröße B. Des Weiteren umfasst die erste Herkunftsdatei 30 erste Verknüpfungsdaten 32 zu den Herkunftsdaten des Engineeringsystems bzw. Herkunftsdateien, von dem die Ausgabedatei empfangen wurde. Vorliegend ist die erste Verknüpfungsdatei 32 leer, da das erste Engineeringsystem 12 keine Ausgabedatei von einem anderen Engineeringsystem empfangen hat. Die Herkunftsdateien 30 sind vorliegend als Header in einem vorbestimmten Dateiformat in der ersten Ausgabedatei 20 integriert.

Mit dem zweiten Engineeringsystem 14 wird eine zweite Ausgabedatei 22 anhand der ersten Ausgabedatei 20 erzeugt. Auch in der zweiten Ausgabedatei 22 sind zweite Herkunftsdaten 34 enthalten, die eine Herkunftsangabe O, einen Zeitstempel T und eine Versionsangabe V umfassen. Zudem umfassen die zweiten Herkunftsdaten 34 zweite Verknüpfungsdaten 36, die eine Verknüpfung zu den ersten Herkunftsdaten 30 der ersten Ausgabedatei 20 herstellen. Auch die dritte Ausgabedatei 24 umfasst entsprechende Herkunftsdaten 38 und dritte Verknüpfungsdaten 40, die auf die zweiten Herkunftsdaten 34 verweisen.

Vorliegend wird nun die Betriebsgröße B von 100° C auf 90° C geändert. Diese Änderung kann beispielsweise durch das dritte Engineeringsystem 16 oder durch eine Benutzereingabe erfolgen. Die dritte Ausgabedatei 24 wird einer übergeordneten Steuereinrichtung 18 übergeben, mit der eine Änderung der Betriebsgröße B erfasst werden kann. In Folge der Änderung der Betriebsgröße B wird von dem dritten Engineeringsystem 16 eine vierte Ausgabedatei 26 erzeugt, die an das zweite Engineeringsystem 14 übertragen wird. Des Weiteren wird von dem zweiten Engineeringsystem 14 eine fünfte Ausgabedatei 28 erzeugt, die an das erste Engineeringsystem 12 übertragen wird. Die fünfte Ausgabedatei 26 umfasst fünfte Herkunftsdaten 42 und fünfte Verknüpfungsdaten 44. Die sechste Ausgabedatei 28 umfasst sechste Herkunftsdaten 46 und sechste Verknüpfungsdaten 48. Somit kann die Änderung der Betriebsgröße B auf alle Engineeringsysteme 12, 14, 16 übertragen werden und damit können Inkonsistenzen vermieden werden.

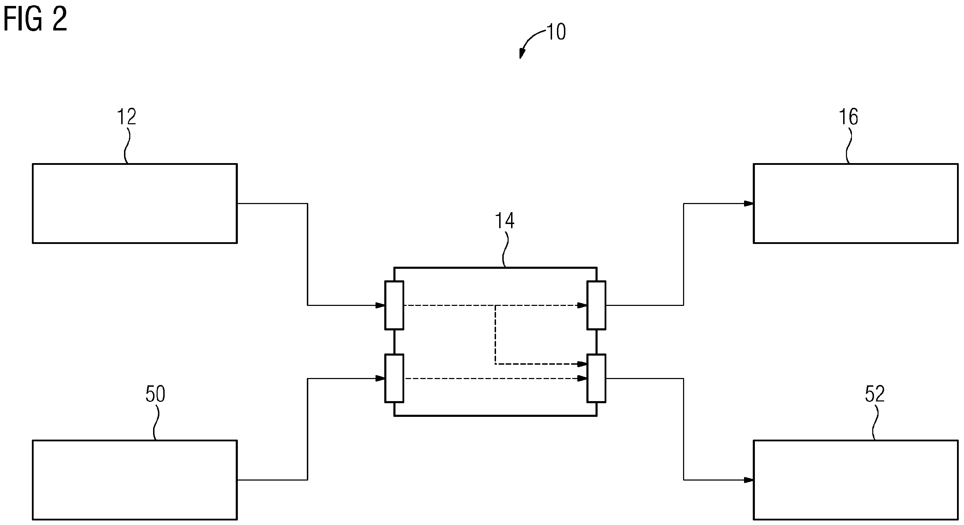

FIG 2 zeigt eine schematische Darstellung der Vorrichtung 10 in einer weiteren Ausführungsform. In diesem Fall dient das zweite Engineeringsystem 14 als zentraler Knotenpunkt. Vorliegend wird dem zweiten Engineeringsystem 14 eine Vorlage 50 für einen Stromlaufplan zugeführt. Anhand von dieser Vorlage 50 kann das zweite Engineeringsystem 14 in Abhängigkeit von der Informationen bzw. der Ausgabedatei 20 von dem ersten Engineeringsystem 12 einen Stromlaufplan 52 erstellen.

Mit einer übergeordneten Steuereinrichtung 18, mit der Verknüpfungen zwischen den Engineeringsystemen 12, 14, 16, beispielsweise mittels der jeweiligen Verknüpfungsdaten 32, 36, 40, 44, 48, hinterlegt sind, kann man Inkonsistenzen in den Ausgabedateien 20, 22, 24, 26,28 und den Betriebsgrößen B nachweisen.

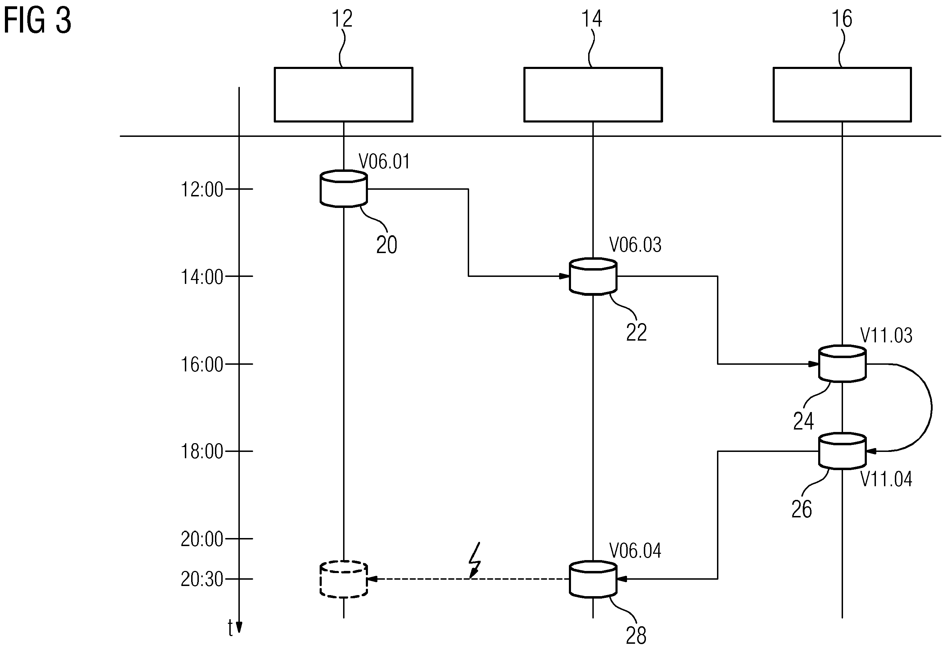

FIG 3 zeigt einen zeitlichen Ablaufplan der Erzeugung der Ausgabedateien 20, 22, 24, 26, 28 mit den Engineeringsystemen 12, 14, 16 nach dem Beispiel von FIG 1. In dem vorliegenden Beispiel wird von dem zweiten Engineeringsystem 14 eine Ausgabedatei erzeugt, die nicht an das erste Engineeringsystem 12 übertragen wird. Folglich wurde die Betriebsgröße B in dem ersten Engineeringsystem 12 nicht aktualisiert. Mit der übergeordneten Steuereinrichtung 18 wird nun ein entsprechendes Warnsignal ausgegeben, welches einen Hinweis darauf gibt, dass Inkonsistenzen in den Ausgabedateien 20, 22, 24, 26, 28 bzw. den Betriebsgrößen B bestehen können.

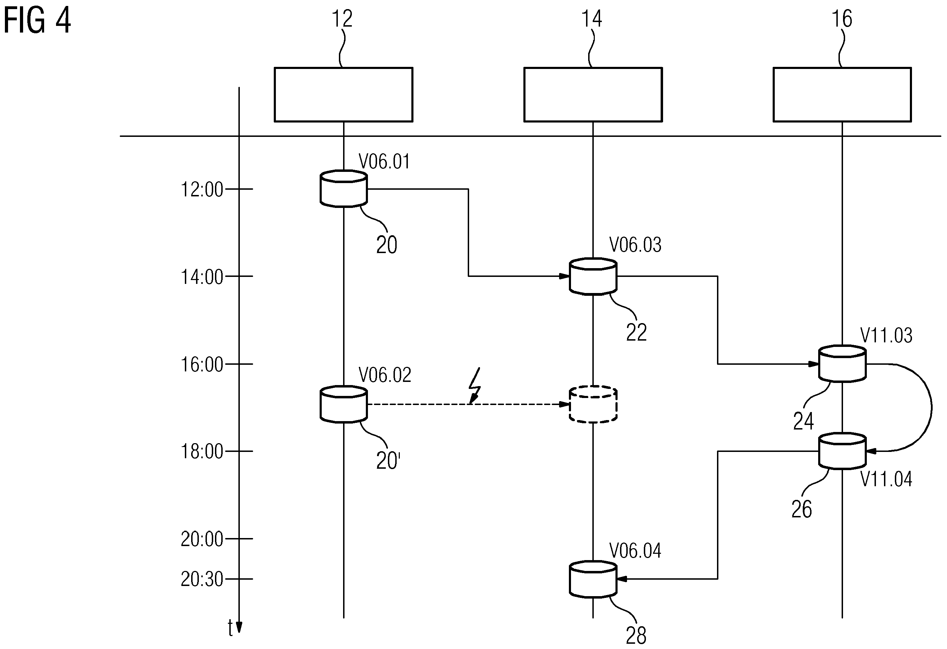

FIG 4 zeigt ein weiteres Beispiel für einen zeitlichen Ablaufplan der Erzeugung der Ausgabedateien 20, 22, 24, 26, 28 der Engineeringsysteme 12, 14, 16. Vorliegend wird mit dem ersten Engineeringsystem 12 eine siebte Ausgabedatei 20' erzeugt, welche aber nicht an das zweite Engineeringsystem 14 übertragen wird. In dem zweiten Engineeringsystem 14 ist die Betriebsgröße B hinterlegt, die in Folge der Änderung von dem dritten Engineeringsystem 16 an das zweite Engineeringsystem 14 übertragen wurde. Mit der übergeordneten Steuereinrichtung kann anhand der Herkunftsdaten der Ausgabedateien, der Versionsnummer V, der Zeitstempel T und der Herkunftsangaben O überprüft werden, ob Inkonsistenzen in den Daten bestehen. Dabei kann es auch vorgesehen sein, bei Änderungen innerhalb der Anlage oder bei der Erstellung von Revisionen automatisch eine Ausgabedatei von dem jeweiligen Engineeringsystem 12, 14, 16 erzeugt wird. Dabei kann es auch ausreichend sein, wenn anstelle der kompletten Ausgabedatei nur die Herkunftsdaten 30, 34, 38, 42, 46 übertragen werden.

Für die Herkunftsdaten 30, 34, 38, 42, 46 können standardisierte Header verwendet werden. Dabei bestehen grundsätzlich zwei Optionen, um den Header bereitzustellen. Zum einen können Header in den jeweiligen Ausgabedateien 20, 22, 24, 26, 28 bereitgestellt werden. Alternativ dazu können die Header mit den Herkunftsdaten 30, 34, 38, 42, 46 in einer separaten Datei gespeichert werden. Wenn nur eine Datei bereitgestellt wird können die Ausgabedateien der zugehörige Header mit den Herkunftsdaten mit unterschiedlichen Dateiänderungen bereitgestellt werden. Dabei kann der Header direkt mit dem jeweiligen Engineeringsystem 12, 14, 16 oder mit einer separaten Recheneinrichtung bereitgestellt werden. Diese separate Recheneinrichtung kann beispielsweise von dem jeweiligen Engineeringsystem 12, 14, 16 aktiviert werden. Alternativ dazu kann die separate Recheneinrichtung zu vorbestimmten Zeitpunkten entsprechende Speicherbereiche in den Engineeringsystemen 12, 14, 16 auslesen.

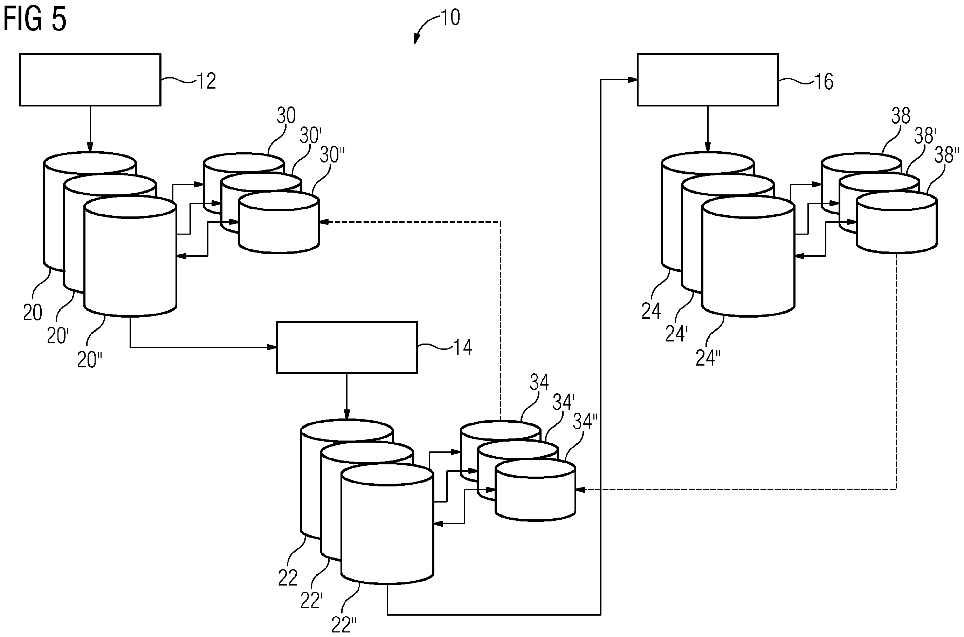

FIG 5 zeigt eine schematische Darstellung der Vorrichtung 10, bei der mehrere Daten für die jeweiligen Ausgabedateien 20, 22, 24, 26, 28 verwendet werden, die in einer gemeinsamen Speichereinrichtung gespeichert werden. Die dazugehörigen Headerdateien mit den Herkunftsdaten werden ebenfalls in der Speichereinrichtung mit einem separaten Dateinamen und einer separaten Endung gespeichert. Beispielsweise werden mit dem ersten Engineeringsystem zeitlich nacheinander drei Ausgabedateien 20, 20' und 20" und jeweils dazugehörige Herkunftsdaten 30, 30' und 30'' erzeugt. Um die Herkunftsdaten 30, 30', 30'' unterscheiden zu können, können beispielsweise die Zeitstempel T verwendet werden. Anhand der Herkunftsangaben O kann unterschieden werden, ob die Dateien von einem anderen Engineeringsystem importiert wurden oder selbst von dem Engineeringsystem 12, 14, 16 geändert wurden. Damit kann auf einfache Weise nachgeprüft werden, durch welches Engineeringsystem 12, 14, 16 eine Änderung erfolgt ist. Diese Information kann beispielsweise zum Management der Anlage oder im schlimmsten Fall zur Auswertung von Beschädigungen in der Anlage verwendet werden. Dabei können die Herkunftsdaten auch so gestaltet sein, dass sie beispielsweise vom Betreiber der Anlage nicht geändert werden können.

Neben Herkunftsdaten kann eine zusätzliche Funktionalität bereitgestellt werden, indem zu den jeweiligen Ausgabedateien ein Verweis auf die Herkunft der Ausgabedateien 20, 22, 24, 26, 28 gespeichert wird. Diese Information kann auch in einer separaten bzw. in einer separaten Speichereinrichtung hinterlegt werden, um Änderungen in bestehenden Systemen zu vermeiden. Somit können die Rückbezüge zwischen den einzelnen Ausgabedateien 20, 22, 24, 26, 28 bzw. den Engineeringsystemen 12, 14, 16 identifiziert werden.

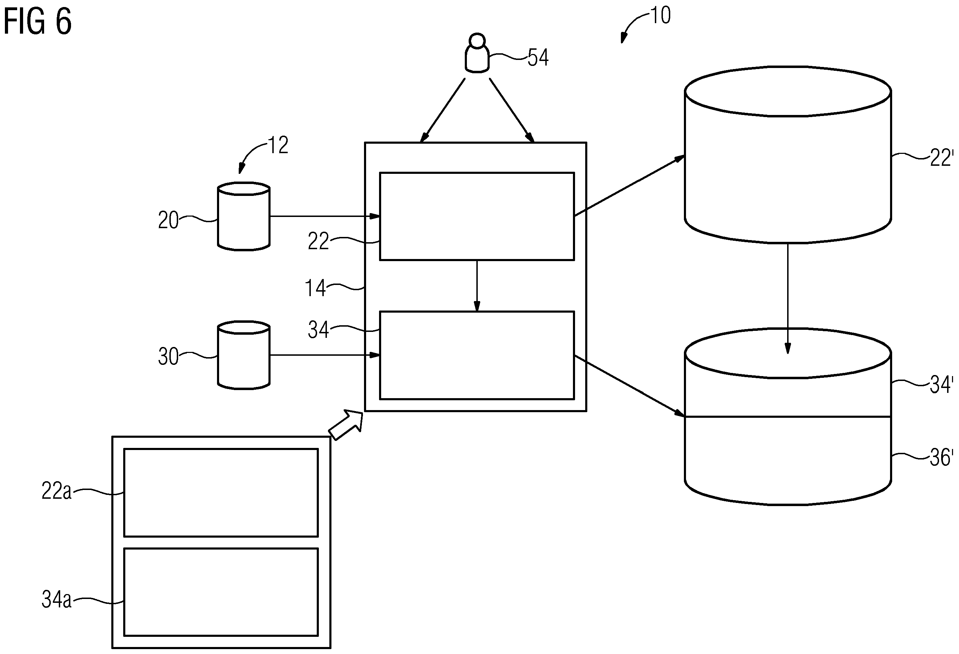

FIG 6 zeigt eine schematische Darstellung der Vorrichtung 10 in einer weiteren Ausführungsform. Hierbei wird von einem Administrator 54 ein Import von Ausgabedateien 20 in das zweite Engineeringsystem 14 initiiert. Dabei werden zunächst die ersten Herkunftsdateien 30 vom ersten Engineeringsystem 12 an das zweite Engineeringsystem 14 übertragen. Anschließend daran wird die erste Ausgabedatei 20 von dem ersten Engineeringsystem 12 an das zweite Engineeringsystem 14 übertragen. Ausgehend von den ursprünglich in dem zweiten Engineeringsystem 14 gespeicherten Ausgabedateien 20a werden anhand der ersten Ausgabedateien 20 und den ersten Herkunftsdaten von dem ersten Engineeringsystem 12 Ausgabedaten 22 und Herkunftsdaten 34 erstellt. Mit dem zweiten Engineeringsystem 14 kann nun anhand der zweiten Herkunftsdaten 34 ein entsprechender Header erzeugt werden, der einen Verweis zu den ersten Herkunftsdaten 30 des ersten Engineeringsystems 12 aufweist. Alternativ dazu kann mit dem zweiten Engineeringsystem 14 eine zweite Ausgabedatei 22' bereitgestellt werden und eine separate Recheneinrichtung erstellt die Herkunftsdaten 34 aus der zweiten Ausgabedatei 22'.

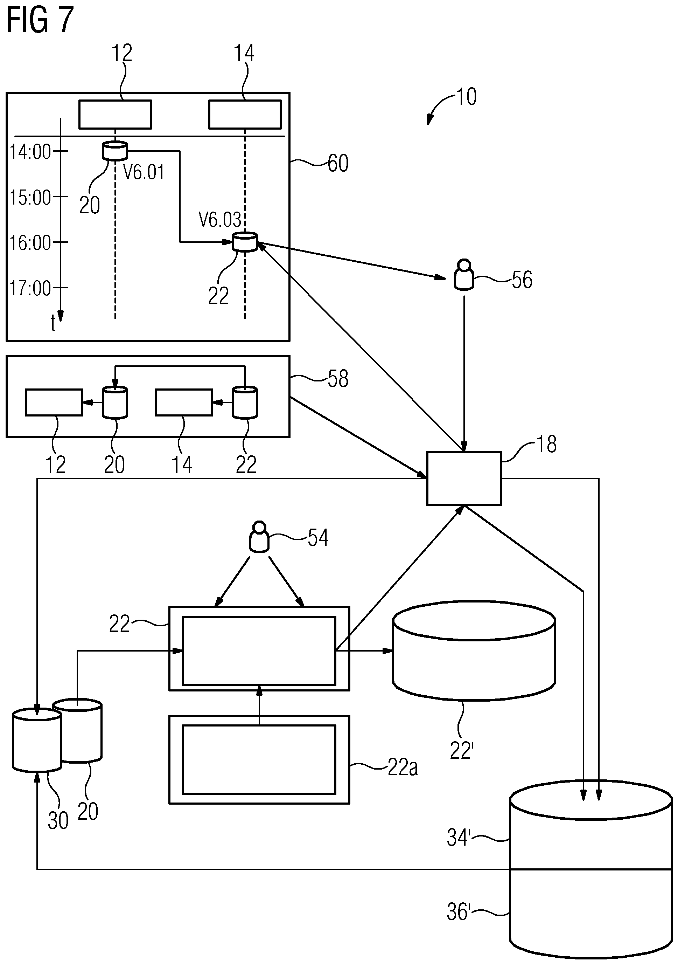

FIG 7 zeigt die Vorrichtung 10 in einer weiteren schematischen Darstellung. In diesem Ausführungsbeispiel ist das zweite Engineeringsystem 14 dazu ausgebildet, Zeitstempel T und Änderungen zu speichern. Das zweite Engineeringsystem 14 ist aber nicht dazu ausgebildet, entsprechende Herkunftsdaten oder Verknüpfungsdaten bereitzustellen. Vorliegend wird mit dem zweiten Engineeringsystem 14 anhand der ersten Ausgabedatei 20 von dem ersten Engineeringsystem 12 eine zweite Ausgabedatei 22' erzeugt. Durch die Bereitstellung der zweiten Ausgabedatei 22' wird eine übergeordnete Steuereinrichtung 18 angesprochen. In der übergeordneten Steuereinrichtung 18 ist die Konfiguration der Engineeringsysteme 12, 14, 16 hinterlegt. Anhand dieser Informationen kann die übergeordnete Steuereinrichtung 18 Herkunftsdaten 34' erzeugen. Diese zweiten Herkunftsdaten 34' umfassen zudem zweite Verknüpfungsdaten 36', die eine Verknüpfung zu den ersten Herkunftsdaten 30 des ersten Engineeringsystems 12 aufweisen. Ein Projektmanager 56 der Anlage kann durch die in der übergeordneten Steuereinrichtung 18 hinterlegten Daten die Rückbezüge zwischen den Engineeringsystemen 12, 14, 16 und den dazugehörigen Ausgabedateien bzw. Herkunftsdaten überprüfen. Zusätzlich kann dem Projektmanager 56 in einer ersten Darstellung 58 die Verknüpfung zwischen den Engineeringsystemen 12, 14, 16 dargestellt werden. Alternativ dazu kann dem Projektffianager 56 in einer zweiten graphischen Darstellung 60 die Erstellung von Ausgabedateien der Engineeringsysteme 12, 14, 16 in Abhängigkeit von der Zeit t dargestellt werden.

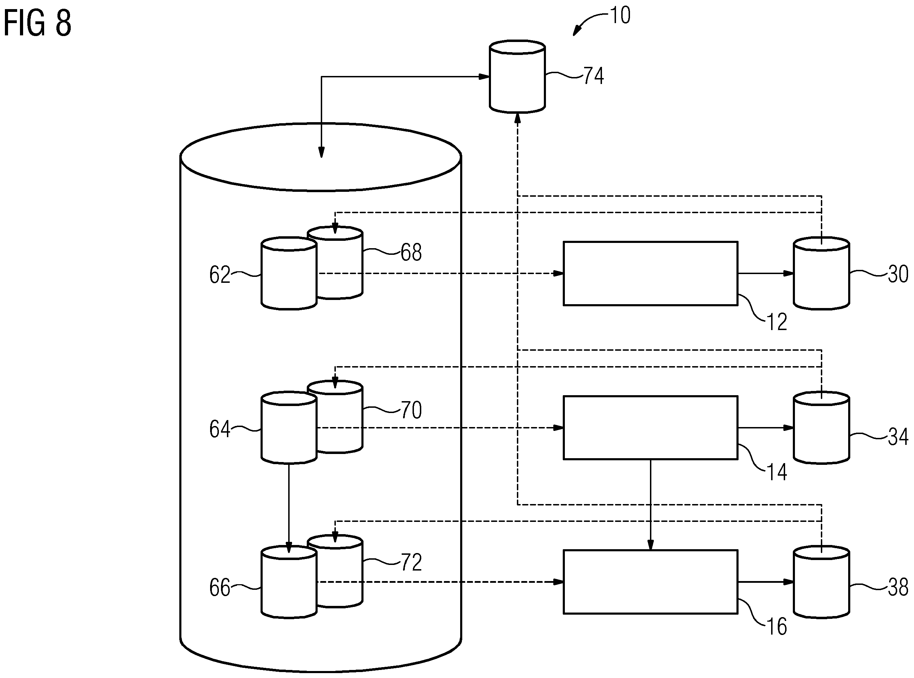

Für die Erstellung von Ausgabedateien und Herkunftsdaten können entsprechende Vorlagen verwendet werden. Dies ist in FIG 8 schematisch verdeutlicht. Die Verwendung von Vorlagen eignet sich insbesondere für heterogene Engineeringsysteme, die beispielsweise für mechanische elektrische oder Automatisierungsbereiche verwendet werden. Vorliegend werden von den Engineeringsystemen 12, 14, 16 entsprechende Vorlagen für Ausgabedateien 62, 64, 66 verwendet. Anhand der Vorlagen 42, 44, 46 wird jeweils mit den Engineeringsystemen eine Herkunftsdatei 30, 34, 38 erzeugt. Die Informationen aus den Herkunftsdaten 30, 34 werden jeweils dazu verwendet entsprechende Vorlagen 68, 70, 72 für Herkunftsdaten zu erstellen. Zudem werden Informationen aus den Herkunftsdaten 30, 34 ,38 einer übergeordneten Vorlage 74 für Herkunftsdaten zugeführt. Somit können entsprechende Standards für die Vorlagen bereitgestellt werden, die zur Planung und der Steuerung der Anlage verwendet werden können.

Durch die zuvor beschriebene Vorrichtung 10 kann basierend auf den Herkunftsdaten und den Verknüpfungsdaten einfach die Abhängigkeiten zwischen den Engineeringsystemen 12, 14, 16 und den dazugehörigen Ausgabedateien festgestellt werden. Somit können Änderungen, beispielsweise der Betriebsgrößen B, einfach nachverfolgt werden. Zusätzlich bedarf es keines zusätzlichen Versionsmanagements. Des Weiteren können sich die Betreiber der Anlage einfacher einen Überblick über die Verknüpfungen zwischen den Engineeringsystemen verschaffen.

## Patentansprüche

1. Verfahren zum Betreiben einer Prozess- und/oder Fertigungsanlage durch
- Bereitstellen von zumindest zwei Engineeringsystemen (12, 14, 16) zum jeweiligen Erzeugen einer Ausgabedatei (20, 22, 24), die eine Betriebsgröße (B) zu zumindest einer Komponente der Prozess- und/oder Fertigungsanlage umfasst,
- Bereitstellen einer ersten Ausgabedatei (20) mit einem ersten der Engineeringsysteme (12),
- Übertragen der ersten Ausgabedatei (20) vom dem ersten der Engineeringsysteme (12) zu zumindest einem zweiten der Engineeringsysteme (14),
- Bereitstellen einer zweiten Ausgabedatei (22) mit dem zumindest zweiten der Engineeringsysteme (14) anhand der ersten Ausgabedatei (20),
- Betreiben der Prozess- und/oder Fertigungsanlage in Abhängigkeit von der zweiten Ausgabedatei (22),
- Bereitstellen von ersten Herkunftsdaten (30), die eine Herkunft der ersten Ausgabedatei (20) von dem ersten der Engineeringsysteme (12) beschreiben, mit
- ersten Verknüpfungsdaten (32) zu den Herkunftsdaten des ersten Engineeringsystems und
- Bereitstellen von zweiten Herkunftsdaten (34), die eine Herkunft der zweiten Ausgabedatei (22) von dem zweiten der Engineeringsysteme (14) beschreiben, wobei
- zusätzlich zu den zweiten Herkunftsdaten (34) zweite Verknüpfungsdaten (36) bereitgestellt werden, die eine Verknüpfung zu den ersten Herkunftsdaten (30) aufweisen,
**dadurch gekennzeichnet, dass**
- bei einer Änderung der Betriebsgröße (B) der zumindest einen Komponente die geänderte Betriebsgröße (B) anhand der zweiten Verknüpfungsdaten (36) von dem zweiten an das erste der Engineeringsysteme (12) übertragen wird.

2. Verfahren nach Anspruch 1, **dadurch gekennzeichnet, dass** in den ersten und den zweiten Herkunftsdaten (30, 34) zusätzlich ein Zeitstempel (T) und/oder eine Versionsnummer (V) bereitgestellt werden.

3. Verfahren nach Anspruch 1, **dadurch gekennzeichnet, dass** eine Fehlermeldung erzeugt wird, falls die geänderte Betriebsgröße (B) nicht von dem zweiten an das erste der Engineeringsysteme (12) übertragen wird.

4. Verfahren nach einem der vorhergehenden Ansprüche, **dadurch gekennzeichnet, dass** die ersten Herkunftsdaten (30) in der ersten Ausgabedatei (20) und die zweiten Herkunftsdaten (34) in der zweiten Ausgabedatei (22) bereitgestellt werden.

5. Verfahren nach einem der Ansprüche 1 bis 3, **dadurch gekennzeichnet, dass** die ersten und die zweiten Herkunftsdaten (30, 34) jeweils in einer separaten Datei bereitgestellt werden.

6. Verfahren nach einem der vorhergehenden Ansprüche, **dadurch gekennzeichnet, dass** die ersten Herkunftsdaten (30) von dem ersten der Engineeringsysteme (12) und die zweiten Herkunftsdaten (34) von dem zweiten der Engineeringsysteme (14) bereitgestellt werden.

7. Verfahren nach einem der Ansprüche 1 bis 5, **dadurch gekennzeichnet, dass** die ersten und zweiten Herkunftsdaten (30, 34) von einer separaten Recheneinrichtung bereitgestellt werden.

8. Vorrichtung (10) zum Betreiben einer Prozess- und/oder Fertigungsanlage mit
- einer Mehrzahl von Engineeringsystemen (12, 14, 16) zum jeweiligen Erzeugen einer Ausgabedatei (20, 22, 24), die eine Betriebsgröße (B) zu zumindest einer Komponente der Prozess- und/oder Fertigungsanlage umfasst, wobei
- ein erstes der Engineeringsysteme (12) eine erste Ausgabedatei (20) bereitstellt und von dem ersten der Engineeringsysteme (12) zu zumindest einem zweiten der Engineeringsysteme (14) überträgt, wobei
- das zumindest eine zweite der Engineeringsysteme (14) eine zweite Ausgabedatei (22) anhand der ersten Ausgabedatei (20) bereitstellt, wobei
- die Vorrichtung (10) die Prozess- und/oder Fertigungsanlage in Abhängigkeit von der zweiten Ausgabedatei (22) betreibt, wobei
- die Vorrichtung (10), erste Herkunftsdaten (30), die eine Herkunft der ersten Ausgabedatei (20) von dem ersten der Engineeringsysteme (12) beschreiben, und ersten Verknüpfungsdaten (32) zu den Herkunftsdaten des ersten Engineeringsystems und zweite Herkunftsdaten (34), die eine Herkunft der zweiten Ausgabedatei (22) von dem zweiten der Engineeringsysteme (14) beschreiben, bereitstellt und zusätzlich zu den zweiten Herkunftsdaten (34) zweite Verknüpfungsdaten (36) bereitstellt, die eine Verknüpfung zu den ersten Herkunftsdaten (30) aufweisen,
**dadurch gekennzeichnet, dass**
- das zweite der Engineeringsysteme (14) bei einer Änderung der Betriebsgröße (B) der zumindest einen Komponente die geänderte Betriebsgröße (B) anhand der zweiten Verknüpfungsdaten (36) an das erste der Engineeringsysteme (12) überträgt.

## Claims

1. Method for operating a process and/or production installation by
- providing at least two engineering systems (12, 14, 16) for respectively generating an output file (20, 22, 24) which comprises an operating variable (B) for at least one component of the process and/or production installation,
- providing a first output file (20) by means of a first one of the engineering systems (12),
- transmitting the first output file (20) from the first one of the engineering systems (12) to at least one second one of the engineering systems (14),
- providing a second output file (22) by means of the at least second one of the engineering systems (14) using the first output file (20),
- operating the process and/or production installation in dependence on the second output file (22),
- providing first origin data (30) which describe an origin of the first output file (20) from the first one of the engineering systems (12), having
- first linkage data (32) to the origin data of the first engineering system, and
- providing second origin data (34) which describe an origin of the second output file (22) from the second one of the engineering systems (14), wherein
- in addition to the second origin data (34), second linkage data (36) are provided which exhibit a linkage to the first origin data (30),
**characterized in that**
- in the case of a change of the operating variable (B) of the at least one component, the changed operating variable (B) is transmitted from the second one to the first one of the engineering systems (12) by means of the second linkage data (36).

2. Method according to Claim 1, **characterized in that** in the first and the second origin data (30, 34), a timestamp (T) and/or a version number (V) are provided additionally.

3. Method according to Claim 1, **characterized in that** an error message is generated if the changed operating variable (B) is not transmitted from the second one to the first one of the engineering systems (12).

4. Method according to one of the preceding claims, **characterized in that** the first origin data (30) are provided in the first output file (20) and the second origin data (34) are provided in the second output file (22).

5. Method according to one of Claims 1 to 3, **characterized in that** the first and the second origin data (30, 34) are provided in each case in a separate file.

6. Method according to one of the preceding claims, **characterized in that** the first origin data (30) are provided by the first one of the engineering systems (12) and the second origin data (34) are provided by the second one of the engineering systems (14).

7. Method according to one of Claims 1 to 5, **characterized in that** the first and second origin data (30, 34) are provided by a separate computing facility.

8. Apparatus (10) for operating a process and/or production installation comprising
- a multiplicity of engineering systems (12, 14, 16) for respectively generating an output file (20, 22, 24) which comprises an operating variable (B) for at least one component of the process and/or production installation, wherein
- a first one of the engineering systems (12) provides a first output file (20) and transmits it from the first one of the engineering systems (12) to at least one second one of the engineering systems (14), wherein
- the at least one second one of the engineering systems (14) provides a second output file (22) by means of the first output file (20), wherein
- the apparatus (10) operates the process and/or production installation in dependence on the second output file (22),
wherein
- the apparatus (10) provides first origin data (30) which describe an origin of the first output file (20) from the first one of the engineering systems (12) and first linkage data (32) to the origin data of the first engineering system and second origin data (34) which describe an origin of second output file (22) from the second one of the engineering systems (14) and, in addition to the second origin data (34), provides second linkage data (36) which exhibit a linkage to the first origin data (30), **characterized in that**
- the second one of the engineering systems (14), in the case of a change of the operating variable (B) of the at least one component transmits the changed operating variable (B) to the first one of the engineering systems (12) by means of the second linkage data (36).

## Revendications

1. Procédé permettant de faire fonctionner une installation de traitement et/ou de fabrication comprenant les étapes suivantes :
- fourniture d'au moins deux systèmes d'ingénierie (12, 14, 16) pour produire respectivement un fichier de sortie (20, 22, 24) qui comprend une grandeur de fonctionnement concernant au moins un élément de l'installation de traitement et/ou de fabrication,
- fourniture du premier fichier de sortie (20) par le premier des systèmes d'ingénierie (12),
- transfert du premier fichier de sortie (20) du premier des systèmes d'ingénierie (12) vers au moins un deuxième (14) des systèmes d'ingénierie,
- fourniture d'un deuxième fichier de sortie (22) par au moins le deuxième (14) des systèmes d'ingénierie sur la base du premier fichier de sortie (20),
- exploitation de l'installation de traitement et/ou de fabrication en fonction du deuxième fichier de sortie (22),
- fourniture de premières données de provenance (30), qui décrivent la provenance du premier fichier de sortie (20) du premier (12) des systèmes d'ingénierie, par des premières données de liaison (32) vers les données de provenance du premier système d'ingénierie et
- fourniture de secondes données de provenance (34), qui décrivent la provenance du deuxième fichier de sortie (22) du deuxième (14) des systèmes d'ingénierie, dans lequel
- en plus des secondes données de provenance (34), des secondes données de liaison (36) sont fournies, qui comportent une liaison vers les premières données de provenance (30),
**caractérisé en ce que**
en cas de modification de la grandeur de fonctionnement (B) du au moins un élément, la grandeur de fonctionnement (B) modifiée est transmise par l'intermédiaire des secondes données de liaison (36) du deuxième au premier des systèmes d'ingénierie (12).

2. Procédé selon la revendication 1, **caractérisé en ce que** dans les premières et secondes données de provenance (30, 34), une marque temporelle (T) et/ou un numéro de version (V) sont fournis complémentairement.

3. Procédé selon la revendication 1, **caractérisé en ce qu'**un message d'erreur est généré dans le cas où la grandeur de fonctionnement modifiée (B) n'est pas transmise du deuxième au premier des systèmes d'ingénierie (12).

4. Procédé selon l'une des revendications précédentes, **caractérisé en ce que** les premières données de provenance (30) sont fournies dans le premier fichier de sortie (20) et les secondes données de provenance (34) sont fournies dans le deuxième fichier de sortie (22).

5. Procédé selon l'une des revendications 1 à 3, **caractérisé en ce que** les premières et les secondes données de provenance (30, 34) sont fournies dans un fichier séparé.

6. Procédé selon l'une des revendications précédentes, **caractérisé en ce que** les premières données de provenance (30) sont fournies par le premier (12) des systèmes d'ingénierie et les secondes données de provenance (34) sont fournies par le deuxième des systèmes d'ingénierie (14) .

7. Procédé selon l'une des revendications 1 à 5, **caractérisé en ce que** les premières et les secondes données de provenance (30, 34) sont fournies par un dispositif de calcul séparé.

8. Dispositif (10) permettant de faire fonctionner une installation de traitement et/ou de fabrication comprenant :
- plusieurs systèmes d'ingénierie (12, 14, 16) pour produire respectivement un fichier de sortie (20, 22, 24), qui comprend une grandeur de fonctionnement (B) concernant au moins un élément de l'installation de traitement et/ou de fabrication, dans lequel
- un premier (12) des systèmes d'ingénierie fournit un premier fichier de sortie (20) et le transmet du premier (12) des systèmes d'ingénierie à au moins un deuxième (14) des systèmes d'ingénierie,
- le au moins un deuxième (14) des systèmes d'ingénierie fournit un deuxième fichier de sortie (22) sur la base du premier fichier de sortie (20),
- le dispositif (10) fait fonctionner l'installation de traitement et/ou de fabrication en fonction du deuxième fichier de sortie (22),
- le dispositif (10) fournit des premières données de provenance (30) qui décrivent la provenance du premier fichier de sortie (20) du premier (12) des systèmes d'ingénierie, des premières données de liaison (32) vers les données de provenance du premier système d'ingénierie et des secondes données de provenance (34) qui décrivent la provenance du deuxième fichier de sortie (22) du deuxième (14) des systèmes d'ingénierie, et fournit, en plus des secondes données de provenance (34), des secondes données de liaison (36), qui comportent une liaison aux premières données de provenance (30),
**caractérisé en ce que**
- le deuxième des systèmes d'ingénierie (14), en cas de modification de la grandeur de fonctionnement (B) du au moins un élément, transmet la grandeur de fonctionnement modifiée (B) au premier (12) des systèmes d'ingénierie au moyen des secondes données de liaison (36).
